# EUROPEAN PATENT APPLICATION

(11) **EP 4 541 170 A1**
(43) Date of publication of application: **23.04.2025**
(21) Application number: 23745617.3
(22) Date of filing: 16.06.2023
(51) Int. Cl.: A01C 1/06, A01N 63/00

(54) **COMPOSITION AND METHOD FOR COATING SEEDS**

(30) Priority: 16.06.2022 ES 202230529
(71) Applicant: CO2 Revolution, S.L., 31382 Navarra Mélida (ES)
(72) Inventor: SESMA, Juan Carlos, 31382 Navarra Mélida (ES)
(74) Representative: Pons
(86) International application number: PCT/ES2023/070395
(87) International publication number: WO 2023/242462

(57) **Abstract**

The present invention is comprised in the field of agrobiotechnology. Specifically, the invention relates to a composition and a method for coating seeds which improves the germination thereof. The present invention also relates to a seed coated with the composition of the invention and to the use of said composition for coating seeds. The composition herein described consists of mycorrhizal fungi, bacteria of the genus *Pseudomonas,* a fungus of the genus *Trichoderma,* a water retainer, clay, an adherent, a fauna deterrent, and organic matter.

## Description

The present invention is comprised in the field of biotechnology and more specifically in agrobiotechnology. Specifically, the invention relates to a composition and a method for coating seeds which improves the germination thereof.

### BACKGROUND OF THE INVENTION

The search for elements which help to promote the development of plants in an environmentally friendly manner has become one of the main objectives in agriculture today. Some of these natural elements are, for example, the use of microorganisms having a certain type of beneficial effect on the plants with which they are associated or with which they present symbiosis.

Microorganisms beneficial for plants (MBP) are considered a natural alternative to relieve pressure on the environment resulting from conventional agriculture. These microorganisms can help plants to maintain or increase productivity while at the same time reducing agrochemical input, restoring soil fertility, and/or overcoming problems caused by abiotic and biotic stresses.

Two main groups of microorganisms, i.e., soil bacteria and fungi, mainly plant growth-promoting bacteria, rhizobia, mycorrhizal fungi, and fungi of the genus *Trichoderma,* stand out among MPBs.

Large-scale application of MBPs may not be viable or economically feasible taking into account the amount of microbial inoculum needed per plant, therefore, there is a need to find efficient and effective inoculation methods to apply these microorganisms.

Seed coating has been considered a precise and cost-effective method for administering microorganisms. Furthermore, it allows large-scale application of MBPs. Microbial coating of seeds comprises the use of other components such as binders or filler elements which are mixed with the microorganism inoculum. These components are used fundamentally to improve the survival of the microorganisms. The most widely used types of seed coating are film coating, pelleting, and encrusting.

Film coating uses an adhesive, usually a polymer, as a fixative to adhere the active compounds to the seed, such as fungicides, insecticides, or biostimulants. Film coating greatly reduces harmful dust from treated seeds, in addition to producing a smooth surface so that the seeds readily flow through the processing and seeding equipment. Film coating does not change the shape of the seed and has less interference with seed germination and active component release.

Pelleting surrounds the seed with a layer which increases the size and weight of the seed and ensures a smooth and uniform shape; typically a sphere or ovoid. Seed pelleting improves handling and planting efficiency. Seed encrusting is similar to pelleting with the main difference being that encrusted seeds retain more of their original shape. The encrusted seed is coated with a lighter layer than pelleting, intended for smoothening and homogenizing seed surfaces in order to facilitate handling. Pelleting and encrusting increase the applied amount of active ingredients and improve seed handling, particularly for those seeds having irregular shapes.

Specific equipment is used depending on the type of coating. The most widely used method is the one which uses a rotary tray. In general, it consists of an inclined round tray which rotates in slow motion, in which materials are added gradually, subsequently sieved, and finally dried, Film coating and encrusting can also be carried out using a fluidized bed, a cylindrical apparatus in which seeds are kept in suspension by a constant hot vertical (from bottom to top) airflow, while being sprayed with coating materials. Another device used for most types of seed coating is a rotating coater or rotor-stator, a cylindrical drum with two rotary base discs, one concave disc, the rotation of which causes the seeds to move constantly along the walls of the drum, and one smaller disc which allows atomization and projection of the coating to the rotating seed mass.

Most studies on MBPs applied through seed coating seek to promote growth, yield, and crop protection against pathogens. Studies have demonstrated that coating seeds with these microorganisms can help improving seedling establishment and germination in crops or achieving high yields and improving food quality, thereby reducing the use of chemical fertilizers.

Patent document US2019200644A1 discloses product forms comprising substrates coated with particles carrying active agents, methods of obtaining such product forms, and uses therefor. The substrate is a fertilizer prill with an active agent selected from chemical pesticides, biofertilizers such as live bacteria, yeasts and fungi, algae, live bacterial spores, yeast spores, and fungal spores for use in promoting the improvement of root and/or shoot growth from germinating seeds.

Patent document US2014342905A1 describes microbial compositions and methods useful for the production of crop plants. In particular, these compositions and methods are useful for improving the growth of plants and/or suppressing the development of plant pathogens and pathogenic diseases. The seeds can be substantially coated in a uniform manner with one or more layers of the microbial compositions. At the same time, the composition may contain other agents capable of improving germination and product quality or a combination thereof, for example, adherents, dispersants, and other nutrients.

Patent document WO2021181422 describes a composition and a process for coating seed material using this composition. The biocoat composition described in this document comprises at least one microbial culture, an excipient, a polymer, an organic acid, starch, and a solvent. This patent document also describes a process for coating a seed material which comprises: mixing the composition with the microbial culture and a pesticide to obtain the biocoat composition, adding the biocoat composition to a seed material, and finally, a drying step to coat the seed material, wherein the addition of the biocoat composition to the seed material is performed in a volume in the range of 5 ml/1000 g - 100 ml/1000 g of seed. The biocoat composition provides a higher percentage of germination, improves nutrient absorption, seedling vigor, and coated seed growth compared to uncoated seeds.

There are different studies that are based on the combined use of beneficial microorganisms for plants with different components that allow coating seeds in order to improve plant performance and crop protection against pathogens. However, there is a need to carry out more research on the microbial coating of seeds so that it can have a wider use.

Research on the formulation of inoculants; for example, microbial survival and viability, component selection, or production costs, is still underexplored. Even when considering the same type of components, it is important to consider the chemical and physical properties that may differ and dictate the efficiency of the coating material as a filler or carrier. Nowadays, one of the materials most widely used as coating for different uses is alginate, since its granules offer the advantage of not being toxic, in addition to being unable to open in acidic environments, while they do so easily in alkaline environments. However, although alginate has the ability to increase bacterial survival, it can also hinder germination, reduce the service life of the coated seeds, or increase the cost of the end product. Combining different MBPs can also be challenging since the functioning of the microbial consortia and their survival in coated seeds are influenced by plant species and growth conditions.

Therefore, there is a need to find combinations of components, including microorganisms, and methods that allow a better coating and encapsulation of seeds, that improve the germination of the seeds and the survival of the plants once germinated.

### DESCRIPTION OF THE INVENTION

The ability to improve plant germination is important within the agricultural industry since in this way good growth of plants can be achieved in regions that are unsuitable for their development, or development in suitable places can be improved, giving rise to plants having a greater productivity, with subsequent economic benefits. If these benefits are furthermore achieved by reducing the use of chemical fertilizers, an environmental benefit is also generated.

There are beneficial microorganisms for plants (MBPs) that can have a positive effect on their growth, increasing their yield, providing tolerance to different types of abiotic or biotic stress, or improving their germination. Coating plant seeds with these microorganisms can improve germination and survival of plants once germination.

In a first aspect, the present invention relates to a composition, hereinafter "the composition of the invention", comprising: at least one mycorrhizal fungus, a bacterium of the genus *Pseudomonas,* a fungus of the genus *Trichoderma,* a water retainer, clay, an adherent, at least one fauna deterrent, and organic matter.

Mycorrhizal fungi are characterized in that in order to fully develop their life cycle they need to establish symbiotic relationships with the roots of vascular plants. This relationship is established by means of the formation of structures called mycorrhizae which allow the exchange of nutrients. There are different types of mycorrhizae, with endomycorrhizae, ectomycorrhizae, and ectendomycorrhizae standing out. Endomycorrhizae are characterized by the presence of hyphae inside the cells of the root cortex. In contrast, ectomycorrhizae are different because the hyphae of the fungus do not penetrate into the cells of the root cortex. Ectendomycorrhizae are defined by presenting affinities to the two types of mycorrhizae, i.e., ectomycorrhizae and endomycorrhizae.

Fungi present in ectomycorrhizae include, but are not limited to, to the genera *Rhizopogon, Cenococcuym, Cortinarius, Thelefora, Pisolithus, Lactarius,* and *Suillus.* Fungi present in ectendomycorrhizae include, but are not limited to, the genus *Endogone.*

The term "genus" refers to the category of biological classification (taxonomic category) that falls between family and species and that comprises one or more phylogenetically-related morphologically-similar species. "Taxonomic category" is understood to mean the level of hierarchy used for the classification of organisms. In the present invention, "species" is understood to mean a taxonomic classification lower than the concept of genus. More specifically, it refers to each of the subgroups into which the genera are divided.

In a particular embodiment, the mycorrhizal fungus of the composition of the invention is selected from the list of genera consisting of: *Pisolithus, Rhizopogon, Lactarius, Tuber,* or any of the combinations thereof.

In a more particular embodiment, the mycorrhizal fungus is selected from the list consisting of: *Pisolithus tinctorius, Rhizopogon roseolus, Lactarius deliciosus, Tuber spp*, or any of the combinations thereof.

*Pisolithus tinctorius, Rhizopogon roseolus and Tuber spp.* are subterranean mycorrhizal fungi having the ability to increase the survival of cultivated plants in adverse conditions. They are capable of causing the mycorrhization of plants in their early stages, protecting the radicle against pathogens, enhancing the resilience of the seedling as a result of a greater resistance to water stress, and improving the absorption of nutrients. *Lactarius deliciosus, Rhizopogon roseolus, and Tuber spp* are edible and marketable species and are characterized in that they can cause the mycorrhization of coniferous plants, for example, but not limited to, pine and pseudotsuga species.

In another preferred embodiment of the present invention, the mycorrhizal fungus is a marketable edible mycorrhizal fungus, most preferably selected from the list of genera consisting of: *Tuber* spp., *Lactarius* spp., *Boletus* spp., *Cantharellus* spp., *Rhizopogon* spp., *Hydnum* spp., *Hygrophorus* spp., *Suillus* spp., *Tricholoma* spp., *Xerocomus* spp., *Russula* spp., *Terfezia* spp., and *Xerocomus* spp., or any of the combinations thereof. These mycorrhizal fungi, in addition to being beneficial due to their biofertilizing activity, have the advantage that they form mushrooms, therefore, in addition to their growth, in the context of the present invention, they are of interest to the food industry.

In another particular embodiment, the bacterium of the genus *Pseudomonas* of the composition of the invention is of the species *Pseudomonas fluorescens.*

The genus *Pseudomonas* is characterized by being a genus of straight or slightly curved, oxidase-positive, Gram-negative bacilli that are obligate anaerobes, although in some cases they can use nitrate as an electron acceptor. The species *Pseudomonas fluorescens* is capable of helping the plant in its initial growth with a biofertilizing effect while synergizing the mycorrhization of the plant with the mycorrhizal fungi at the same time. The species *Pseudomonas fluorescens* stimulates plant growth by means of the production of antibiotics, thus preventing plant diseases caused by other pathogenic bacteria and fungi. It also accelerates the germination of seeds and the growth of plants as a result of the synthesis of hormones, such as auxins, gibberellins and cytokines, and other substances, such as specific growth promoters.

Auxins are a group of phytohormones that function as plant growth regulators (essentially causing cell elongation) and can be natural (synthesized by a plant cell in the wild) or artificial (synthesized in the laboratory). Examples of natural auxins include, but are not limited to, indole-3-acetic acid (IAA), 4-chloroindole-3-acetic acid (4-CI-IAA), and phenylacetic acid. Examples of artificial auxins include, but are not limited to, indolebutyric acid (IAB) and naphthalene acetic acid (ANA).

Gibberellin is a phytohormone produced in the apical zone, fruits, and seeds, the main functions of which are to interrupt the dormancy period of seeds, causing them to germinate, induce the development of buds and fruits, and regulate of the longitudinal stem growth. Examples of gibberellins include, but are not limited to, gibberellic acid (GA3), gibberellin A1 (GA1), and ibberellin A4 (GA4).

Cytokines are phytohormones that promote cell division and differentiation. Examples of cytokinins include, but are not limited to, cis- and trans-zeatin, isopentenyladenine, dihydrozeatin (with its respective glycosylated derivatives), benzyladenine, kinetin, and topolin.

In another particular embodiment, the fungus of the genus *Trichoderma* of the composition of the invention is of the species *Trichoderma viride* or *Trichoderma citrinoviride,* preferably *Trichoderma citrinoviride.*

The genus *Trichoderma* is a genus of fungi in the family Hypocreaceae. This genus is characterized by having a biological control effect against pathogens. The genus *Trichoderma* protects crop soil in two ways: fighting the appearance of pests and other parasitic fungi in the plant's culture medium and establishing a relationship with the root zone of the plant whereby it stimulates the correct development of roots by working in synergy with mycorrhizal fungi.

The species *Trichoderma viride* is a broad spectrum species, allows efficient control of phytopathogenic fungi such as, for example, *Rhizoctonia, Pythium, Fusarium,* and *Armillaria,* and is completely harmless to animals, including humans. Furthermore, it promotes plant growth and degrades toxic compounds present in the soil.

The species *Trichoderma citrinoviride* is more common in forest ecosystems where it survives on organic matter. Its functions are similar to those of *T.viride* but its adaptation to the forest environment makes it more efficient in multiplication in the field.

In another particular embodiment, the water retainer of the composition of the invention is a hydrogel composed of potassium polyacrylate, preferably in powder. Water retainers are applied for retaining water and nutrients in soils, improving water management and plant growth, acting as a water reservoir and releasing it according to the needs of the plants. The hydrogel composed of potassium polyacrylate is environmentally safe and biodegradable.

In another particular embodiment, the adherent of the composition of the invention is a synthetic or natural polymer, preferably selected from the list consisting of: polyvinyl alcohol, polyvinyl acetate, methylcellulose, carboxymethylcellulose, maltodextrin, gum arabic, xanthan gum, or any of the combinations thereof, more preferably xanthan gum.

The term "adherent" refers to the component that can keep two or more components attached to one another by surface contact. Selection of the suitable type and concentration of adherent is crucial for seed germination, plant development, the viability of the applied microorganisms. Xanthan gum is a polysaccharide extracted from a bacterium and presents as a whitish powder.

In another particular embodiment, the clay of the composition of the invention is selected from the list consisting of: attapulgite, sepiolite, kaolinitic clays, or any of the combinations thereof, preferably attapulgite.

Clays allow housing the fungi and bacteria described in the preceding paragraphs, performing an important task of helping the development of seedlings. Furthermore, they perform an important task of retaining water, supplying nutrients, and housing the radicle in the soil.

In another particular embodiment, the fauna deterrent of the composition of the invention is chili extract, commercial perfume for men, or a combination of both, preferably a combination of both.

The term "fauna deterrent" refers to that component having the ability to scare away animals. Both chili extract and commercial perfume for men have a very satisfactory and significant deterrent effect.

In another particular embodiment, the organic matter of the composition of the invention is wood fiber, preferably sieved wood fiber of less than 0.5 mm.

In another particular embodiment, the composition of the invention comprises the following concentrations: between 0.2 and 0.5 grams of spores of mycorrhizal fungus, between 0.3 and 0.8 ml of bacteria of the genus *Pseudomonas,* between 0.1 and 0.3 grams of the fungus of the genus *Trichoderma,* between 0.1 and 0.3 grams of water retainer, between 0.05 and 0.1 grams of adherent, between 2.0 and 2.8 grams of clay, between 0.1 and 0.3 grams of chili extract, between 0.2 and 0.5 ml of commercial perfume, and between 0.2 and 0.6 grams of organic matter.

In another more particular embodiment, the composition of the invention comprises the following concentrations: 0.3 grams of spores of mycorrhizal fungus, 0.5 ml of bacteria of the genus *Pseudomonas,* 0.1 grams of the fungus of the genus *Trichoderma, 0.1* grams of water retainer, 0.05 grams of adherent, 2.4 grams of clay, 0.1 grams of chili extract, 0.3 ml of commercial perfume, and 0.4 grams of organic matter.

The mycorrhizal fungi are added to the mixture of the invention preferably in the form of spore. The term "spore" refers to the generally haploid and unicellular reproductive cell produced in the sporangia of fungi, either asexually or as a result of a sexual reproduction process, which at the same time allows dispersion and long-term survival (dormancy) in adverse conditions.

In another particular embodiment, the composition of the invention may also comprise other elements necessary for plant germination, development, and growth. In that sense, said composition may optionally comprise, but not limited to, carbon sources, mineral salts, and/or organic and inorganic nutrients. The composition may also comprise other elements, such as biofertilizers or biostimulants that favor germination, while at the same time protecting the seeds and preventing them from drying out. The term "biofertilizer", as it is used herein, refers to substances or mixtures thereof produced by organisms or to the same organisms, which help in plant growth and/or development. The term "biostimulant" herein refers to substances and/or microorganisms that improve the nutrition provided by the fertilizer, enhancing the absorption of nutrients, helping the crop against stress conditions, and acting on the biochemical processes that improve plant metabolism, leading to the attainment of higher quality and quantity productions.

In addition, the composition of the invention may comprise compounds that participate in plant development, such as phytohormones. Phytohormones are substances produced by plant cells that are involved in a multitude of biological processes and are capable of regulating the physiological phenomena of plants. Examples of phytohormones that can be used in the composition of the invention include, but are not limited to, auxins, gibberellins, and cytokines. The terms "auxins", "gibberellins", and "cytokines" have been defined or explained in the preceding paragraphs, and said definition is applicable to the present inventive aspect. Furthermore, the composition of the invention may also comprise macroelements and microelements that provide nutrients to plants.

Macroelements are those elements that are expressed as % in the plant or in g/100 g. The main macroelements are nitrogen, phosphorus, potassium, calcium, magnesium, and sulfur. Microelements are expressed as ppm. (part per million) = mg/kg = mg /1000 g, and the main microelements are iron, zinc, copper, manganese, molybdenum, boron, and chlorine. There are also other beneficial nutrients such as, for example, silicon, sodium, and cobalt that strengthen some characteristics of plants in different species.

Another aspect of the present invention relates to the use of the composition of the invention for coating seeds.

Seed coating is the process by which the surface of the seed is coated with exogenous materials (solid and/or liquid), forming a more or less continuous layer, to provide and/or release active compounds such as growth regulators, micronutrients, and microbial inocula, which protect the seed against phytopathogens and allow an improvement in plant growth and germination.

The types of seed coating are widely known in the state of the art and any of them can be used in the context of the present invention. The choice of the type of coating (for example, film-like coating, encrusting, or pelleting), will depend on the crop requirements. In a preferred embodiment of the use of the composition of the invention for coating seeds, said coating is of the biofilm type.

The techniques and equipment for coating seeds are also widely known in the state of the art, and any of them can be used in the context of the present invention. Nevertheless, in a particular embodiment, seed coating can be performed using a rotary tray, a fluidized bed, or a rotating coater (rotor-stator).

Another aspect of the present invention relates to a seed coated with the composition of the invention, hereinafter "the seed of the invention".

The seed of the invention can belong to any plant such as, for example, but is not limited to, forest plants, crop plants, ornamental plants, and fodder plants.

In a particular embodiment, the seed of the invention is furthermore encapsulated in a semifluid material comprising wood fiber, preferably comprising the commercial product ForestGold^{®}. The commercial product ForestGold^{®} comprises wood fiber and peat in a ratio of 80/20.

ForestGold^{®} is a natural fibrous material stabilized with peat. Chips from softwood trees are subjected to high temperatures by means of high-pressure water vapor and separated into well-defined fibers, a process that ensures that the material is free of seeds, diseases, and harmful organisms. Then, the fibers are mixed with a small amount of high-quality fine peat, which ensures the stability of the raw material during storage. The final result is the ForestGold^{®} product the specifications of which are as follows: density 70-90 g/l (CEN), pH 5.0-5.5 (CEN, H₂O), EC 11 µS/cm (CEN, H₂O), thickness 0.25-1.00 mm, length 10-20 mm.

In another particular embodiment, the semifluid material further comprises water, chitosan, and xanthan gum.

The wood fiber together with the water, chitosan, and xanthan gum allow creating a material with a flexible but resistant texture, leading to the possibility of dispersing the seed of the invention coated with the composition of the invention in the field using different means, such as, for example, but are not limited to, drones, quads, robots, sowing machines.

In another particular embodiment, the encapsulation is at least 1 cm³ thick around the seed of the invention.

In the present invention, the term "encapsulate" or "encapsulation" refers to the process by which other exogenous materials are added to the seed coated with the composition of the invention, forming a capsule, to improve seed management and/or dispersion, and to protect the seed against different types of biotic and abiotic stress.

Another aspect of the present invention relates to a method, hereinafter "the method of the invention", for coating seeds, which improves their germination and comprises the following steps:
i) preparing the composition of the invention;
ii) adding half of the composition prepared in (i) to the seed in the presence of water and performing homogenization;
iii) adding the other half of the composition prepared in (i) to the seed resulting from step (ii) in the presence of water and performing homogenization;
iv) leaving the seed resulting from step (iii) to dry; and
v) preferably repeating steps (i) to (iv) at least one more time, more preferably at least four more times.

As understood by a person skilled in the art, the size of the seed coating is adjustable, thus, as described in step (v) of the method of the invention, steps (i) to (iv) can be repeated in order to achieve a larger coating. Preferably, steps (i) to (iv) of the method of the invention are repeated at least one more time, and more preferably they are repeated at least four more times.

In another particular embodiment, the drying of step (iv) of the method of the invention is performed at a temperature of between 20 and 25°C, preferably at 22°C.

In another particular embodiment, the method of the invention comprises an additional step (vi) of encapsulating the resulting seed in a semifluid material comprising wood fiber, preferably comprising the commercial product ForestGold^{®}.

The term "encapsulate" or "encapsulation" has already been defined or explained in the preceding paragraphs and said definition is applicable to the present inventive aspect.

In another particular embodiment, the semifluid material further comprises water, chitosan, and xanthan gum.

In another particular embodiment, the encapsulation of step (vi) is performed until providing at least 1 cm³ of semifluid material around the seed.

As understood by a person skilled in the art, different substrates can be used to encapsulate the seed. These substrates must allow the seed to be housed well in the soil and the radicle to develop well. In the method of the invention, the substrate used for seed encapsulation is wood fiber, but alternatively or additionally other substrates can be used such as, for example, but not limited to: peat (blonde peat, black peat), sieved peat, unsieved peat, vermiculite, or perlite.

In another particular embodiment, the method of the invention further comprises an additional step at the end of the method wherein said step comprises scarifying the resulting seeds in hydrogen peroxide, preferably at 20-40%, more preferably at 30%, and/or hydrating the resulting seeds in distilled water, preferably for at least 24 h.

Scarification is a technique that is carried out in order to shorten the germination time of seeds. It is an abrasion of the outer wall of the seed (seed pod) to allow the endosperm to come into contact with air and water. It can be performed by abrasion, with chemicals, or physically or mechanically using a knife, needle, or sandpaper, being careful not to damage the inside of the seed. In the present invention, seed scarification is performed with chemicals; preferably the seeds are immersed in hydrogen peroxide (H₂O₂), more preferably at a concentration of between 20% and 40%, both ends included, even more preferably at a concentration of 30%, more preferably under stirring. Seed scarification can be more or less aggressive, depending on the time the seeds are immersed in H₂O₂. Whether it is more or less aggressive depends on the size of the seed, in other words, the smaller the seed, the shorter the time of immersion in H₂O₂.

### EXAMPLES

Below, the invention will be illustrated by means of assays carried out by the inventors which demonstrate the effectiveness of the composition and method of the invention.

### 1. Components

The inventors have carried out a search for components that improve the germination and survival of plants once germinated.

### 1.1. Mycorrhizal fungi

There is a wide variety of mycorrhizal fungi that colonize plants. The inventors have selected four fungi for their incorporation into seeds. These fungi are: *Pisolithus tinctorius, Rhizopogon roseolus, Lactarius deliciosus,* and *Tuber spp.*

These fungi have been selected because they are pine fungi, particularly *Pisolithus* and *Rhizopogon.* They are capable of causing the mycorrhization of plants in their early stages, protecting the radicle against pathogens, enhancing the resilience of the seedling as a result of a greater resistance to water stress, improving the absorption of nutrients, and growing more. Furthermore, *Rhizopogon roseolus, Lactarius deliciosus,* and *tuber spp* are edible and marketable species.

### 1.2. Bacteria

The bacteria selected by the inventors were bacteria of the genus *Pseudomonas,* more specifically the species *Pseudomonas fluorescens. P. fluorescens* is capable of helping the plant in its initial growth with a biofertilizing effect while synergizing the mycorrhization of the plant with the mycorrhizal fungi mentioned in the preceding section at the same time.

### 1.3. Fungi of the genus Trichoderma

The inventors have selected the species *Trichoderma viride* and the species *Trichoderma citrinoviride* due to the biological control effect against pathogens that this fungus has. Furthermore, *Trichoderma viride* has a wide spectrum of action.

### 1.4. Organic matter

The inventors have selected different types of organic matter to be tested as an additive. These materials are: sieved wood fiber <0.5 mm, sieved peat <0.5 mm, corn cob powder 250 µ or biochar 250 µ.

The inventors conducted several adherence and encapsulation tests with these types of organic matter and with the rest of the components defined in this section and, finally, selected wood fiber as it generates the best result, in addition to being the most sustainable product with organic certification.

### 1.5. Fauna deterrents

The inventors have selected two additives as environmentally friendly and zero-residue fauna deterrents; chili extract and commercial perfume for men. The results obtained with the two products were similar; they had a very satisfactory and significant deterrent effect on untreated seeds. Of 100 seeds placed in an environment with a large number of rodents and rabbits, treated seeds had 45% less predation.

### 1.6. Gels and retainers

In the state of the art, these products have already been tested in numerous trials. The inventors have decided to use a hydrogel composed of potassium polyacrylate, preferably in powder.

### 1.7. Adherents

Among the many adherents that are known in the state of the art, among them, polyvinyl alcohol, polyvinyl acetate, methylcellulose, carboxymethylcellulose, maltodextrin, gum arabic, or xanthan gum; the inventors have chosen xanthan gum as an adherent as it is an inexpensive product with a high adherent capacity.

### 1.8. Clays

Clays allow housing the inocula of the fungi and bacteria that perform an important task of helping the development of seedlings. Furthermore, they perform an important task of retaining water, supplying nutrients, and allowing the housing of the radicle in the soil. The inventors selected three types of clay to be tested: attapulgite, sepiolite, and kaolinitic clays. The final encapsulated product was similar with the three selected clays, although the best encapsulation was obtained with attapulgite.

### 2. Prilling techniques

The inventors have conducted a large number of prilling tests by adding different concentrations of the components mentioned in the preceding section. The inventors have used a technique (biofilm) similar to that used for coating agricultural seeds with fungicides, but they have introduced a series of modifications and innovations which are described below.

First, to perform the coating of seeds, a mixture with different additives was prepared to test the coating thereof. The ratios of each additive for 30 g of seeds were as follows:
- 0.3 g of spores of *Pisolithus tinctorius, Rhizopogon roseolus, Lactarius deliciosus,* and *Tuber spp* at 33%.
- 0.5 ml of the bacterium *Pseudomonas fluorescens.*
- 0.1 g of the fungus *Trichoderma viride* or *Trichoderma citrinoviride.*
- 0.4 g of wood fiber.
- 0.1 g of retainer gel.
- 0.05 g of xanthan gum.
- 2.4 g of attapulgite.
- 0.1 g of chili extract
- 0.3 ml of commercial perfume.

Once the mixture is prepared, the seeds were introduced in a sealed container and 1.1 ml of water was added thereto, homogenized by means of stirring, and then half of the previously prepared mixture was added. It was stirred until homogeneous and the same process was repeated with water and the mixture of remaining additives.

The seeds were left to dry at a temperature of 22°C, and once dry, the same process was carried out four more times in order to create a thicker coating.

### 3. Development of a biodegradable capsule

The inventors have furthermore developed a new biodegradable capsule, thus defining a new product with high efficiency.

A large number of encapsulated seed of all kinds were tested. In order for the seed to be housed well in the soil and for the radicle to develop well, the content thereof should be as similar as possible to the content of seeds found in a nursery, where conditions are optimal for seed germination. Therefore, the inventors began to work with peats and substrates for manufacturing the biodegradable capsule. After performing tests with different types of peat (blonde peat, black peat), sieved and unsieved peat, vermiculite, and perlite, the inventors chose to use a commercial product based on wood fiber. This product is sustainable and generated from wood and not peat, which is a non-sustainable extractive product. In that sense, the inventors carried out the tests in which they generated a wood fiber capsule using the product called ForestGold^{®} produced by the company Pindstrup as a substrate. With this fiber a polymer was generated with the addition of water, chitosan, and xanthan gum that allowed creating a material with a flexible but resistant texture, capable of being dispersed in the field by different means such as, for example, drones or sowing machines.

The final result consisted of a seed encapsulated in a semifluid biomaterial capable of housing not only the seed but also the additives that have been successfully tested previously. The size of the encapsulated product is adjustable, but it entails providing 1 cm³ of biomaterial around the seed containing mycorrhizal fungi, bacteria, fungi of the genus *Trichoderma,* water retainers, clays, fauna deterrents, and organic matter in a high percentage (90% by weight).

The germination tests conducted with this encapsulated product have given a result of 100% reliability, in other words, allowed the germination of 100% of the seeds treated with this technique, always taking into account the germination capacity of each batch of seeds used.

### 4. New pre-germination systems

The inventors have used two techniques for pre-germination tests.

### 4.1. Scarification with hydrogen peroxide

The inventors have conducted tests with different times for different species. In all cases, the seeds were immersed in H₂O₂ at 30% concentration under stirring and subsequently washed with distilled water.

For *Pinus pinea* and *Pinus pinaster* a scarification of 20 minutes was performed. Meanwhile, for *Pinus halepensis, Pinus nigra, Pinus sylvestris,* and *Pinus radiata* a less aggressive 3-minute application was performed, due to the small size of the seeds.

This system had very scattered results in general, but it entailed an improvement in the germination of the seeds of *P*. *pinea* and *P. pinaster* of 9%.

### 4.2. Hydration for 24 hours in distilled water

This is a very common treatment that, however, has a very positive effect in order to achieve rapid seed germination.

In both cases, significant differences were observed in the speed and development of germination. As an average data, a 64% reduction in seed germination time was obtained.

## Claims

1. A composition comprising: at least one mycorrhizal fungus, a bacterium of the genus *Pseudomonas,* a fungus of the genus *Trichoderma,* a water retainer, clay, an adherent, at least one fauna deterrent, and organic matter.

2. The composition according to claim 1, wherein the mycorrhizal fungus is selected from the list of genera consisting of: *Pisolithus, Rhizopogon, Lactarius, Tuber,* or any of the combinations thereof.

3. The composition according to any of claims 1 or 2, wherein the mycorrhizal fungus is selected from the list consisting of: *Pisolithus tinctorius, Rhizopogon roseolus, Lactarius deliciosus, Tuber spp,* or any of the combinations thereof.

4. The composition according to claim 1, wherein the mycorrhizal fungus is an edible mycorrhizal fungus selected from the list consisting of: *Tuber* spp., *Lactarius* spp., *Boletus* spp., *Cantharellus* spp., *Rhizopogon* spp., *Hydnum* spp., *Hygrophorus* spp., *Suillus* spp., *Tricholoma* spp., *Xerocomus* spp., *Russula* spp., *Terfezia* spp., and *Xerocomus* spp., or any of the combinations thereof.

5. The composition according to any one of claims 1 to 4, wherein the bacterium of the genus *Pseudomonas* is of the species *Pseudomonas fluorescens.*

6. The composition according to any one of claims 1 to 5, wherein the fungus of the genus *Trichoderma* is of the species *Trichoderma viride* or *Trichoderma citrinoviride,* preferably *Trichoderma citrinoviride.*

7. The composition according to any one of claims 1 to 6, wherein the water retainer is a hydrogel composed of potassium polyacrylate, preferably in powder.

8. The composition according to any one of claims 1 to 7, wherein the adherent is a synthetic or natural polymer, preferably selected from the list consisting of: polyvinyl alcohol, polyvinyl acetate, methylcellulose, carboxymethylcellulose, maltodextrin, gum arabic, xanthan gum, or any of the combinations thereof, more preferably xanthan gum.

9. The composition according to any one of claims 1 to 8, wherein the clay is selected from the list consisting of: attapulgite, sepiolite, kaolinitic clays, or any of the combinations thereof, preferably attapulgite.

10. The composition according to any one of claims 1 to 9, wherein the fauna deterrent is chili extract, commercial perfume for men, or a combination of both, preferably a combination of both.

11. The composition according to any one of claims 1 to 10, wherein the organic matter is wood fiber, preferably sieved wood fiber of less than 0.5 mm.

12. The composition according to any one of claims 1 to 11, comprising the following concentrations: between 0.2 and 0.5 grams of spores of mycorrhizal fungus, between 0.3 and 0.8 ml of bacteria of the genus *Pseudomonas,* between 0.1 and 0.3 grams of the fungus of the genus *Trichoderma,* between 0.1 and 0.3 grams of water retainer, between 0.05 and 0.1 grams of adherent, between 2.0 and 2.8 grams of clay, between 0.1 and 0.3 grams of chili extract, between 0.2 and 0.5 ml of commercial perfume, and between 0.2 and 0.6 grams of organic matter.

13. The composition according to claim 12, comprising the following concentrations: 0.3 grams of spores of mycorrhizal fungus, 0.5 ml of bacteria of the genus *Pseudomonas,* 0.1 grams of the fungus of the genus *Trichoderma,* 0.1 grams of water retainer, 0.05 grams of adherent, 2.4 grams of clay, 0.1 grams of chili extract, 0.3 ml of commercial perfume, and 0.4 grams of organic matter.

14. Use of the composition according to any one of claims 1 to 13 for coating seeds.

15. A seed coated with the composition according to any one of claims 1 to 13.

16. The seed according to claim 15, which is further encapsulated in a semifluid material comprising wood fiber, preferably comprising the commercial product ForestGold^{®}.

17. The seed according to claim 16, wherein the semifluid material further comprises water, chitosan, and xanthan gum.

18. The seed according to any of claims 16 or 17, wherein the encapsulation is at least 1 cm³ thick.

19. A method for coating seeds comprising the following steps:
i) preparing a composition according to any one of claims 1 to 13;
ii) adding half of the composition prepared in (i) to the seed in the presence of water and performing homogenization;
iii) adding the other half of the composition prepared in (i) to the seed resulting from step (ii) in the presence of water and performing homogenization;
iv) leaving the seed resulting from step (iii) to dry; and
v) preferably repeating steps (i) to (iv) at least one more time, more preferably at least four more times.

20. The method according to claim 19, wherein the drying of step (iv) is performed at a temperature of between 20 and 25°C, preferably at 22°C.

21. The method according to any of claims 19 or 20, comprising an additional step (vi) of encapsulating the resulting seed in a semifluid material comprising wood fiber, preferably comprising the commercial product ForestGold^{®}.

22. The method according to claim 21, wherein the semifluid material further comprises water, chitosan, and xanthan gum.

23. The method according to any of claims 21 or 22, wherein the encapsulation of step (vi) is performed until providing at least 1 cm³ of semifluid material around the seed.

24. The method according to any one of claims 19 to 23, further comprising an additional step at the end of the method wherein said step comprises scarifying the resulting seeds in hydrogen peroxide, preferably at 20-40%, more preferably at 30%, and/or hydrating the resulting seeds in distilled water, preferably for at least 24 h.
